# EUROPÄISCHE PATENTSCHRIFT

(11) **EP 1 113 178 B1**
(45) Veröffentlichungstag und Bekanntmachung des Hinweises auf die Patenterteilung: **18.09.2002**
(21) Anmeldenummer: 00127854.8
(22) Anmeldetag: 20.12.2000
(51) Int. Cl.: F16B 21/07, F16B 37/08

(54) **Haltefeder- Einsatz-Anordnung**
Spring retainer insert device
Dispositif d'insertion d'un ressort de retenue

(30) Priorität: 24.12.1999 DE 29922800 U
(43) Veröffentlichungstag der Anmeldung: 04.07.2001
(73) Patentinhaber: Schwarz Verbindungs-Systeme GmbH, 75382 Althengstett (DE)
(72) Erfinder: Schwarz, Helmut, 71263 Weil der Stadt (DE)
(74) Vertreter: Blutke, Klaus Wilhelm, Dipl.-Ing.

(56) Entgegenhaltungen:
- EP-A- 0 454 914
- EP-A- 0 905 390
- DE-A- 4 109 902
- US-A- 4 274 323

## Beschreibung

Die Erfindung betrifft eine Haltefeder-Einsatz-Anordnung.
So wie Gewinde-Einsätze in Bauteile eingesetzt werden, um Schraubverbindungen zu ermöglichen, werden sogenannte Haltefeder-Einsatz-Anordnungen in Bauteile eingesetzt, um

Verbindungen mit einem an einem anderen Bauteil befestigten Bolzen zu ermöglichen. Dieser Bolzen geht dabei mit der Haltefeder eine lösbare form- und kraftschlüssige Verbindung ein.
Bolzen- Haltefeder- Verbindungsanordnungen sind z.B. in den deutschen Gebrauchsmustern 299 204 99.5; 299 204 98.7 oder in der DE-A-41 09 902 beschrieben.

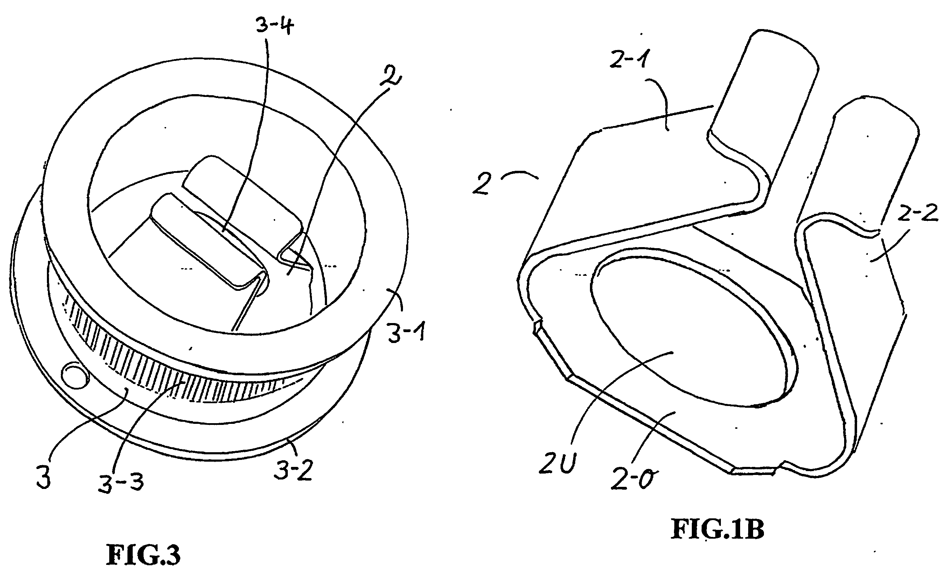

Haltefeder-Einsatz-Anordnungen nach dem Stand der Technik (FIG. 3) weisen eine einteilige Kammer (aus Metall) auf mit der die Haltefeder fest verbunden ist (z.B. durch Verstemmen). Das Metall-Material bedingt höheres Gewicht (das z.B. in der Flugzeugtechnik unerwünscht ist).
Zudem ist bei einer derartigen einteiligen Kammer die Haltefeder durch einen zusätzlichen Arbeitsgang fest mit ihr zu verbinden.
Es ist Aufgabe der Erfindung, eine andere Haltefeder-Einsatz-Anordnung anzugeben.
Diese Aufgabe der Erfindung wird in vorteilhafterweise durch die im kennzeichnenden Teil des Anspruches 1 angegebeben Merkmale gelöst.
Weiterbildungen der Erfindung sind in den Unteransprüchen gekennzeichnet.

Danach kann z.B. die feste Verbindung der Haltefeder mit der Kammer entfallen - die Haltefeder kann lose in die aus Kammerhälften bestehende Kammer eingesetzt werden.
Die Kammer kann aus Kunststoffteilen gebildet werden.

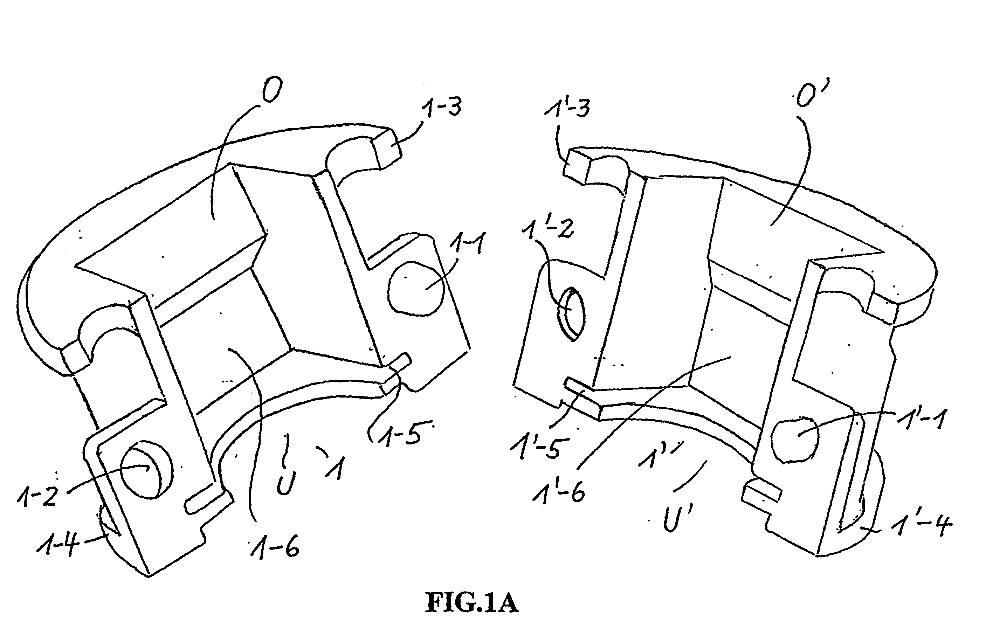

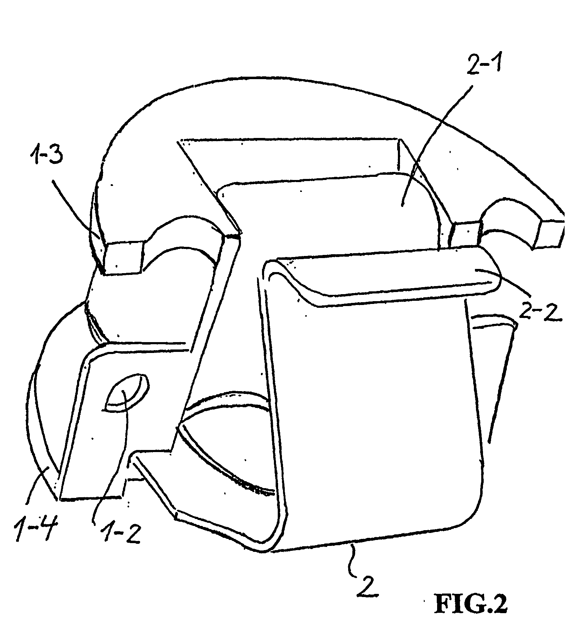

Ein Ausführungsbeispiel der Erfindung ist in den Zeichnungen dargestellt und wird im folgenden näher beschrieben. Es zeigen:
FIG. 1A
   eine schematische perspektivische Darstellung der erfindungsgemäßen Haltefeder-Einsatz-Anordnung, bestehend aus zwei (auseinandergezogen gezeichneten) Kammerhälften;
FIG. 1B
   eine schematische perspektivische Darstellung einer Haltefeder mit zwei freien Federarmen, deren Enden einander zugeneigt sind;
FIG. 2
   eine schematische perspektivische Darstellung einer Kammerhälfte gemäß FIG. 1A mit eingesetzter Haltefeder gemäß **FIG. 1B;**
FIG.3
   eine schematische perspektivische Darstellung einer Haltefeder-Einsatz-Anordnung nach dem Stand der Technik.

FIG. 1A zeigt
eine schematische perspektivische Darstellung der erfindungsgemäßen Haltefeder-Einsatz-Anordnung, bestehend aus zwei auseinandergezogen gezeichneten Kammerhälften 1 und 1'. Beide vorzugsweise identisch ausgebildete Kammerhälften dienen der Aufnahme einer in FIG. 1B dargestellten Haltefeder 2. Vor dem Zusammenfügen der Kammerhälften 1 und 1' wird gemäß der Darstellung in FIG.2 die Haltefeder in eine Kammerhälfte eingeführt; dann wird die zweite (in FIG. 2 nicht dargestellte) Kammerhälfte über den aus der ersten Kammerhälfte herausstehenden Teil der Haltefeder auf die erste Kammerhälfte aufgesetzt. Die die Haltefeder enthaltende aus den zwei Kammerhälften bestehende Kammer ist sodann fertig für den Einsatz in bzw. die Verbindung mit einem Bauteil. Vorzugsweise erfolgt die Verbindung der Haltefeder-Einsatz-Anordnung mit einem Bauteil durch Verkleben oder Vergießen der Einsatz-Anordnung in einer Bohrung des Bauteils. Andere Verbindungsarten sind ebenfals möglich, z.B. durch Einpressen in eine Bohrung des Bauteils, Aufkleben oder Anschrauben auf dem Bauteil etc.
Für ein exaktes Zusammenfügen der beiden Kammerhälften 1 und 1' sind diese mit Zapfen 1-1, 1'-1 und Bohrungen 1-2, 1'-2 versehen. Die Bohrung 1'-2 der einen Kammerhälfte dient zur Aufnahme des Zapfens 1-1 der anderen Kammerhälfte , die Bohrung 1-2 dient der Aufnahme des Zapfens 1'-1.Die Kammerhälften weisen in ihrem Innern Aussparungen 1-5, 1'-5; 1-6 und 1'-6 zur Aufnahme der Haltefeder 2 auf. Diese Aussparungen sind auf die Gestaltung der Haltefeder abgestimmt und dienen einem verschiebungsfesten und verdrehsicheren Sitz der Haltefeder in der Kammer. Die freien Federenden haben ausreichenden Freiraum zur ihrer Bewegung für das Ein- und Ausrasten der freien Haltefederarmenden in entsprechende Aussparungen des (nicht dargestellten) Haltebolzens.

FIG. 1B zeigt
eine schematische perspektivische Darstellung einer Haltefeder 2 mit zwei freien Federarmen 2-1 und 2-2 , deren Enden einander zugeneigt sind.

Die Haltefeder weist ein Basisteil 2-0 mit zwei gegenüberliegenden Seiten auf, von denen die beiden freien Feder-Arme 2-1 und 2-2 ausgehen.
Die Enden der freien Federarme sind einander zugeneigt und voneinander beabstandet (zum Hindurchführen des nicht **dargestellten Verbindungsbolzens).**

Das Basisteil 2-0 hat eine angenäherte quadratische oder rechteckige Kontour. Die zwei gegenüberliegende Ränder des Basisteils (von denen nicht die Federarme ausgehen) sind in den nutförmigen Aussparungen 1-5 und 1'-5 der Kammerhälften angeordnet. Dadurch erhält die Basis 2-0 einen verdreh- und verschiebungssicheren Sitz in der Kammer.
Der untere Teil der freien Federarme 2-1 und 2-2 ist in den Aussparungen 1-6 und 1'-6 der Kammerhälften aufgenommen, die seitlichen Wandungen dieser Aussparungen lassen keine Verdrehung der Haltefeder zu. Zum Hindurchführen des Verbindungsbolzens durch die Kammer weist diese an ihrer Grund- und/oder Deckfläche aufeinander ausgerichtete Öffnungen O, O' und U, U' auf. Das Basisteil 2-0 der Haltefeder 2 hat eine ebenfalls darauf ausgerichete Öffnung 2-U .
Es sind auch Ausführungen einer aus Haltefeder und Verbindungsbolzen bestehenden Verbindungsananordnung denkbar, bei der die Kammer nur eine obere Öffnung zum Hindurchführen des Verbindungsbolzens aufweist.

Das Äußere der Kammerhälften weist (bei gedachter Anordnung der Haltefeder-Einsatz-Anordnung in einem Bauteil) verschiebungsund/oder verdrehungsverhindernde Aussparungen und Vorsprünge auf. Diese Gestaltung kommt besonders dann zum Tragen, wenn die Haltefeder-Einsatz-Anordnung mit einem Bauteil durch Vergießen verbunden ist.
Desweiteren weisen die Kammerhälften nach außen weisende obere 1-3, 1'-3 und untere Randteile 1-4, 1'-4 auf.

Die Kammerhälften sind vorzugsweise aus Kunsststoff hergestellt. Durch die Zweiteilung der Kammer ist es möglich, die Haltefeder formschlüssig in der Kammer anzuordnen , ohne daß die Feder fest mit der Kammer wie beim Stand der Technik verbunden sein muß.

FIG.3 zeigt
eine schematische perspektivische Darstellung einer Haltefeder-Einsatz-Anordnung nach dem Stand der Technik (Hersteller SCHWARZ Verbindungs-Systeme GmbH, Deutschland, Teilenummer EC 11 S ).
Diese Anordnung besteht aus einer einteiligen zylindertopfartigen Kammer 3 aus Metall mit einem nach außen weisenden oberen 3-1 und unteren 3-2 Rand und mit Riffelungen 3-3 , die einen verdrehfesten Sitz im Bauteil gewährleisten sollen.
Im Topfinneren ist die Haltefeder 2 gemäß FIG. 2 mit dem Topfboden (zum Beispiel durch Verstemmen) fest verbunden. Der Kammerboden weist eine auf die Öffnung 3-4 der Haltefeder ausgerichtete Öffnung auf.

Die Erfindung ist nicht auf die im Ausführungsbeispiel dargestellte zweiarmige Haltefeder beschränkt. Es sind auch Ausführungsformen von Haltedern mit einer von 2 abweichenden Armzahl denkbar.

## Patentansprüche

1. Haltefeder-Einsatz-Anordnung,
bestehend aus einer hohlprofilähnlichen Kammer und einer darin angeordneten Haltefeder (2), die dem Eingriff in ein in die Anordnung einführbares Verbindungsteil dient,
**dadurch gekennzeichnet, daß**
die Kammer in zwei Kammerhälften (1, 1') zweigeteilt ist.

2. Anordnung nach Anspruch 1,
**dadurch gekennzeichnet,**
**daß** die Kammerhälften (1, 1') mittels eines Vorsprungs an der einen Kammerhälfte und mittels einer diesem Vorsprung entsprechenden Aussparung an der anderen Kammerhälfte miteinander verbindbar sind.

3. Anordnung nach Anspruch 2,
**dadurch gekennzeichnet, daß**
der Vorsprung ein Zapfen (1-1, 1'-1) und die Aussparung eine Bohrung (1-2, 1'-2) ist.

4. Anordnung nach einem der Ansprüche 1 bis 3,
**dadurch gekennzeichnet, daß**
die Kammerhälften identisch sind.

5. Anordnung nach einem der Ansprüche 1 bis 4 ,
**dadurch gekennzeichnet,**
**daß** die Kammerhälften im äußeren Bereich ( bei gedachter Anordnung der Haltefeder-Einsatz-Anordnung in einem Bauteil) verschiebungs- und/oder verdrehungsverhindernde Aussparungen und Vorsprünge aufweisen.

6. Anordnung nach einem der Ansprüche 1 bis 5,
**dadurch gekennzeichnet,**
**daß** die Kammerhälften (1, 1') nach außen weisende obere (1-3, 1'-3) und untere Randteile (1-4, 1'-4) aufweisen.

7. Anordnung nach einem der Ansprüche 1 bis 6,
**dadurch gekennzeichnet, daß**
im Innern der Kammerhälften (1, 1') verschiebungs- und/oder verdrehungsverhindernde Aussparungen (1-5, 1'-5; 1-6, 1'-6) und Vorsprünge für die formschlüssige Aufnahme eines Teils der Haltefeder (2) vorgesehen sind.

8. Anordnung nach einem der Ansprüche 1 oder 7,
**dadurch gekennzeichnet, daß**
die Haltefeder mindestens einen freien Arm aufweist, dessen Ende dem Eingriff in das gedachte Verbindungsteil dient.

9. Anordnung nach Anspruch 8,
**dadurch gekennzeichnet, daß**
die Haltefeder (2) aus einem Basisteil (2-0) mit zwei gegenüberliegenden Seiten und aus zwei freien Feder-Armen (2-1, 2-2) besteht, die von diesen gegenüberliegenden Seiten ausgehen, die mit ihren Enden einander zugeneigt und voneinander beabstandet sind.

10. **Anordnung nach Anspruch 9,**
**dadurch gekennzeichnet,**
**daß** das Basisteil (2-0) eine angenäherte quadratische oder rechteckige Kontour aufweist.

11. Anordnung nach einem der Ansprüche 1 bis 10,
**dadurch gekennzeichnet, daß**
die Haltefeder (2) und die aus den Kammerhälften (1, 1') bestehende Kammer an ihrer Grund- und/oder Deckfläche aufeinander ausgerichtete Öffnungen (O,O'; U, U') zum gedachten Hindurchführen des Verbindungsteils aufweisen.

12. Anordnung nach einem der Ansprüche 1 bis 11,
**dadurch gekennzeichnet,**
**daß** die Haltefeder-Einsatz-Anordnung mit einem Bauteil durch Verkleben oder Vergießen verbindbar ist.

13. Anordnung nach einem der Ansprüche 1 bis 12,
**dadurch gekennzeichnet,**
**daß** die Kammerhälften aus Kunststoff sind.

## Claims

1. Retaining-spring insert arrangement
consisting of a chamber similar to a hollow section and a retaining spring (2) arranged therein which serves to engage the connecting part which can be inserted into the arrangement,
**characterised in that**
the chamber is divided into two half chambers (1, 1').

2. Arrangement in accordance with claim 1,
**characterised in that**
the half chambers (1, 1') can be connected with one another by means of a projection on one half chamber and a corresponding recess in the second half chamber.

3. Arrangement in accordance with claim 2,
**characterised in that**
the projection is a tappet (1-1, 1'-1) and the recess is a hole (1-2, 1'-2).

4. Arrangement in accordance with claims 1 - 3,
**characterised in that**
the half chambers are identical.

5. Arrangement in accordance with one of the claims 1 - 4,
**characterised in that**
the outer area of the half chambers (in the intended arrangement of the retaining-spring insert arrangement in a component) there are recesses and projections which prevent movement and/or turning.

6. Arrangement in accordance with one of the claims 1 - 5,
**characterised in that**
the half chambers (1, 1') have upper (1-3, 1'-3) and lower (1-4, 1'-4) edge parts which point outwards.

7. Arrangement in accordance with one of the claims 1 - 6,
**characterised in that**
recesses (1-5, 1'-5; 1-6, 1'-6) and projections which prevent movement and/or turning are provided in the interior of the half chambers (1, 1') in order to receive part of the retaining spring (2) in a form-fit.

8. Arrangement in accordance with one of the claims 1 - 7,
**characterised in that**
the retaining spring has at least one free arm, whose end serves to engage the intended connecting part.

9. Arrangement in accordance with claim 8,
**characterised in that**
the retaining spring (2) consists of a base part (2-0) with two sides opposite one another and two free spring arms (2-1, 2-2), which issue from these two opposite sides, whose ends are inclined towards one another and are at a certain distance from one another.

10. Arrangement in accordance with claim 9,
**characterised in that**
the base part (2-0) has a contour which is approximately square or rectangular.

11. Arrangement in accordance with one of the claims 1 - 10,
**characterised in that**
the retaining spring (2) and the chamber consisting of two half chambers (1, 1') have openings (0, 0'; U, U') aligned with one another on their bottom and/or top surface for insertion of the intended connecting part.

12. Arrangement in accordance with one of the claims 1 - 11,
**characterised in that**
the retaining-spring insert arrangement can be attached to a component by adhesive bonding or casting.

13. Arrangement in accordance with one of the claims 1 - 12,
**characterised in that**
the half chambers are made of plastic.

## Revendications

1. Dispositif d'insert à ressort de maintien composé d'une chambre profilée en creux et d'un ressort de maintien (2) disposé dans celle-ci, destiné à se mettre en prise dans un élément de liaison pouvant être introduit dans le dispositif, **caractérisé en ce que** la chambre est partagée en deux moitiés de chambre (1, 1').

2. Dispositif selon la revendication 1, **caractérisé en ce que** les moitiés de chambre (1, 1') peuvent être reliées l'une à l'autre au moyen d'une saillie sur une moitié de chambre et d'un évidement correspondant à cette saillie sur l'autre moitié de chambre.

3. Dispositif selon la revendication 2, **caractérisé en ce que** la saillie est un goujon (1-1, 1'-1) et l'évidement un alésage (1-2, 1'-2).

4. Dispositif selon l'une quelconque des revendications 1 à 3, **caractérisé en ce que** les moitiés de chambre sont identiques.

5. Dispositif selon l'une quelconque des revendications 1 à 4, **caractérisé en ce que** les moitiés de chambre présentent dans leur partie extérieure (quand le dispositif d'insert à ressort de maintien est inséré de la manière envisagée dans un élément de construction) des évidements empêchant leur translation et/ou leur rotation.

6. Dispositif selon l'une quelconque des revendications 1 à 5, **caractérisée en ce que** les moitiés de chambre (1, 1') présentent des parties de bord supérieures (1-3, 1'-3) et inférieures (1-4, 1'-4) orientées vers l'extérieur.

7. Dispositif selon l'une quelconque des revendications 1 à 6, **caractérisé en ce qu'**il est prévu à l'intérieur des moitiés de chambre (1, 1') des évidements (1-5, 1'-5 ; 1-6, 1'-6) et de saillies empêchant la translation et/ou la rotation pour la réception par engagement de la forme d'une partie du ressort de maintien (2).

8. Dispositif selon l'une quelconque des revendications 1 ou 7, **caractérisé en ce que** le ressort de maintien présente au moins un bras libre dont l'extrémité est destinée à se mettre en prise dans l'élément de liaison envisagé.

9. Dispositif selon la revendication 8, **caractérisé en ce que** le ressort de maintien (2) se compose d'une partie de base (2-0) comportant deux faces opposées et de deux bras de ressort libres (2-1, 2-2) qui partent de ces faces opposées, sont inclinés l'un vers l'autre à leurs extrémités et sont distants l'un de l'autre.

10. Dispositif selon la revendication 9, **caractérisé en ce que** la partie de base (2-0) présente un contour approximativement carré ou rectangulaire.

11. Dispositif selon l'une quelconque des revendications 1 à 10, **caractérisé en ce que** le ressort de maintien (2) et la chambre formée par les moitiés de chambre (1, 1') présentent sur leur surface de fond et/ou de sommet des ouvertures (O, O' ; U, U') destinées au passage envisagé de l'élément de liaison.

12. Dispositif selon l'une quelconque des revendications 1 à 11, **caractérisé en ce que** le dispositif d'insert à ressort de maintien peut être collé ou moulé d'un seul tenant avec un élément de construction.

13. Dispositif selon l'une quelconque des revendications 1 à 12, **caractérisé en ce que** les moitiés de chambre sont faites de matière plastique.
